Europäisches Patentamt

European Patent Office

Office européen des brevets

(19)

(11) Veröffentlichungsnummer: **0 117 899**
**B1**

(12) # EUROPÄISCHE PATENTSCHRIFT

(45) Veröffentlichungstag der Patentschrift:
09.03.88

(51) Int. Cl.⁴: **B 62 D 65/00**

(21) Anmeldenummer: **83111000.2**

(22) Anmeldetag: **04.11.83**

(54) Vorrichtung zum Montage von Fertighimmeln in Fahrzeugen sowie Vorrichtung zur Durchführung des Verfahrens.

(30) Priorität: **10.11.82 DE 3241615**

(43) Veröffentlichungstag der Anmeldung:
**12.09.84 Patentblatt 84/37**

(45) Bekanntmachung des Hinweises auf die Patenterteilung:
**09.03.88 Patentblatt 88/10**

(84) Benannte Vertragsstaaten:
**DE FR GB IT SE**

(56) Entgegenhaltungen:
**DE - A - 1 680 027**
**FR - A - 2 445 247**

(73) Patentinhaber: **AUDI AG, Postfach 220,
D-8070 Ingolstadt (DE)**

(72) Erfinder: **Motzet, Josef, Etrichstrasse 21,
D-8070 Ingolstadt (DE)**
Erfinder: **Kaller, Adolf, Olympiastrasse 15, D-8077 Baar
(DE)**
Erfinder: **Michel, Wilfried, Semmelweisstrrasse 1,
D-8071 Stammham (DE)**

(74) Vertreter: **Le Vrang, Klaus, AUDI AG
Postfach 220 Patentabteilung I/EQP, D-8070 Ingolstadt
(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

## Beschreibung

Die Erfindung bezieht sich auf ein Verfahren zur Montage von Fertighimmeln in Fahrzeugen, wobei mit Hilfe einer Montagevorrichtung der mit Kleber beschichtete Fertighimmel durch einen Fensterausschnitt im Fahrzeug eingeführt und unter Druck an das Dach des Fahrzeuges gepresst wird, sowie eine Vorrichtung zur Durchführung des Verfahrens.

Bei einem bekannten, gattungsgemässen Verfahren wird der mit Kleber beschichtete Fertighimmel vom Werker in eine etwa C-förmige Montagevorrichtung eingelegt und mittels einer an die Montagevorrichtung angebrachten Bedieneinrichtung von Hand durch einen Fensterausschnitt in der Fahrzeugkarosserie in diese eingeführt. Nun führt der Werker mittels der Bedieneinrichtung einen am Fertighimmel angebrachten Klips in eine entsprechende Aufnahmeöffnung im vorderen Dachholm der Fahrzeugkarosserie ein. Anschliessend werden an dem in dem Fahrgastraum einragenden Schenkel der C-förmigen Montagevorrichtung schwenkbar gelagerte Füsse ausgefahren, welche sich am Fahrzeugboden abstützen und den Fertighimmel unter Druck an das Fahrzeugdach anpressen. Nach dem Aufbringen eines für die Haltekraft des verwendeten Kontaktklebers notwendigen Druckes werden die Füsse wieder eingefahren und die Montagevorrichtung von Hand aus der Karosserie herausbewegt.

Die bekannte Vorrichtung benötigt viel Platz in Fahrzeuglängsrichtung, zum einen für das Aufnahmeteil des Fertighimmels, welches in etwa die Längserstreckung des Innenraumes ausmacht und zum andern für die Bedieneinrichtung deren Länge etwa der Länge der vorderen Haube entsprechen muss, damit der Werker von vorne an die Montagevorrichtung herantreten kann. Zum Ausfahren der Montagevorrichtung wird demnach ein Platz vor der Fahrzeugkarosserie benötigt, welcher mindestens der Länge des Fertighimmels entspricht. Der Abstand bei modernen Montagebändern wird heutzutage aus wirtschaftlichen Überlegungen wesentlich geringer gewählt, so dass eine derartige Fertighimmel-Montage auf einem Nebenband oder einer Nebenstelle ausgeführt werden muss. Der Aufwand, Karosserien aus dem Fördersystem herauszunehmen und nach dern entsprechenden Bearbeitungsstation wieder in das Fördersystem einzutakten sind erheblich.

Bei einer weiteren bekannten Montagevorrichtung (siehe DE-A-1 680 027) wird die Auskleidung in das Innere der Karosserie eingebracht und mit Hilfe eines Blähkörpers an die innere Dachfläche angepresst.

Ein grosser Nachteil der bekannten Montagevorrichtungen ist durch das indirekte Abstützen der Montagevorrichtung am Boden beim Anpressen des Fertighimmels am Fahrzeugdach bedingt. Das Abstützen am Boden führt zum Aufreissen von Schweisspunkten bzw. zu Verformungen der Bodengruppe im Abstützbereich bei der bereits lackierten Karosse. Die dadurch auftretenden Toleranzabweichungen werden noch erhöht durch die manuelle Ausrichtung, welche sich alleinig durch einen Klips am vorderen Dachholm orientiert. An der Montagevorrichtung sind zwar vier, mit den Dachpfosten zusammenwirkende Vorzentrierrollen vorgesehen, diese dienen jedoch lediglich dazu, den Fertighimmel festgelegten Klips auf die Öffnung im vorderen Dachholm hinzuführen. Durch die manuelle Zuführung und Ausrichtung wird für jeden Montagevorgang viel Zeit benötigt; insbesondere auch wenn die Vorrichtung für einen anderen Fahrzeugtyp eingesetzt werden soll. Eine wahlweise Bestückung unterschiedlicher Fahrzeugkarosserien ist nicht möglich, so dass dafür mehrere Montagevorrichtungen zur Verfügung stehen müssen.

Der vorliegenden Erfindung liegt die Aufgabe zugrunde, bei höherer Genauigkeit die Wirtschaftlichkeit bei der Montage von Fertighimmeln in Fahrzeugen zu erhöhen.

Die Aufgabe wird dadurch gelöst, dass beim Anpressen des Fertighimmels an das Fahrzeugdach der erforderliche Gegendruck durch die Aussenseite des Fahrzeugdaches einwirkende Mittel der Montagevorrichtung erzeugt wird. Dadurch wird das Aufreissen von Schweisspunkten bzw. die Verformung der Bodengruppe mit Sicherheit vermieden und ein beliebig hoher Anpressdruck möglich. Ausserdem wird die Voraussetzung für eine höhere Flexibilität der Montagevorrichtung, insbesondere in Abzug auf den Einsatz für mehrere Fahrzeugtypen und für kürzere Durchlaufzeiten geschaffen.

Besonders vorteilhaft ist, wenn jeder Fertighimmel ausserhalb der Montagevorrichtung auf ein Trägerelement aufgesetzt wird, das bestückte Trägerelement gegen Austausch eines leeren Trägerelementes in die Montagevorrichtung eingebracht wird und insbesondere wenn für unterschiedlich ausgebildete Fahrzeugkarosserien unterschiedliche Trägerelemente zur Aufnahme entsprechender Fertighimmel Verwendung finden. Durch die Verwendung von Trägerelementen für den Fertighimmel wird im Gegensatz zu dem bekannten Verfahren die Voraussetzung dafür geschaffen, dass ein Überlappen von Einzelvorgängen während dem Zyklus möglich ist. Die Gesamtzeit kann somit wesentlich reduziert werden. Durch die Verwendung unterschiedlicher Trägerelemente für unterschiedlich ausgebildete Fahrzeugkarosserien (Typen) lässt sich das Verfahren auch bei einer grossen Typenvielfalt verwenden, ohne dass dadurch die Gesamtzeit negativ beeinflusst wird. Durch die Verwendung von Trägerelementen ist ausserdem eine einfache Typerkennung gegeben.

Erfolgt die Zuführung der Trägerelemente automatisch und wird jedes Trägerelement auf einer Seite in die Montagevorrichtung eingefahren und schiebt dieses dabei gleichzeitig das in der Montagevorrichtung befindliche, leere Trägerelement auf die andere Seite aus, dann ist dadurch neben der Einsparung einer Arbeitskraft ein wesentlich rascherer Wechsel der Trägerelemente möglich, als wenn zunächst das leere Trägerelement ausgefahren, und auf derselben Seite das mit einem Fertighimmel bestückte Trägerelement in die Montagevorrichtung eingefahren wird. Kurze Wechselzeiten sind unter anderem auch die Voraussetzung, dass eine Montagevorrichtung für ein mit vorgegebener Geschwindigkeit bewegtes Fördersystem mit Fahrzeugkarosserien ausreicht und nicht eine zweite Montagevorrichtung erforderlich wird. Dafür wären nämlich eine Antriebs- und Abbremsstation für die einzelnen Elemente des Fördersystems beim Ein- und Austakten notwendig. Diese Vorrichtungen sind sehr aufwendig und damit in der Herstellung teuer.

In Verbindung mit dem eben beschriebenen Fördersystem ist es besonders vorteilhaft, wenn die Montagevorrichtung selbsttätig auf die zu bestückende Fahrzeugkarosserie zufährt, mit dem Fördersystem verkoppelt und durch das Fördersystem während des Montagevorganges bis in seine Ausgangsposition zurückbewegt wird. Je nach baulichen Gegebenheiten ist es gleichsam möglich, dass die Montagevorrichtung an das Fördersystem angekoppelt wird, durch dieses während des Montagevorganges weiterbewegt wird und nach Beendigung des Montagevorganges abkoppelt und durch einen eigenen Antrieb in seine Ausgangsposition zurückbewegt wird. Bei beiden Vorgehensweisen wird durch den Synchronlauf ein erheblicher Zeitgewinn erzielt und durch die Montage an der bewegten Karosse keine dadurch bedingte Ungenauigkeit hervorgerufen.

Bei dem erfindungsgemässen Verfahren ist es vorteilhaft, wenn die das Trägerelement aufnehmende Teile der Montagevorrichtung nach Massgabe der relativen Höhe des Daches der auf dem Fördersystem festgelegten Fahrzeugkarosserie zur Montagevorrichtung vor dem Einfahren in die Fahrzeugkarosserie selbsttätig in der Höhe und nach Massgabe eines weiteren Fühlers beim Einfahren selbsttätig in Fahrzeuglängsrichtung ausgerichtet werden. Somit ist schon vor bzw. während dem Einfahren der Montagevorrichtung in die Fahrzeugkarosserie die Montagevorrichtung genau in Bezug auf das Dach des jeweils mit einem Fertighimmel auszurüstender Karosserievariante.

Gemäss einem weiteren Merkmal der Erfindung ist es vorteilhaft, wenn für die Verklebung des Fertighimmels am Dach der Fahrzeugkarosserie ein lösungsmittelfreier Kleber verwendet wird. Das vorgeschlagene Verfahren ist in besonderer Weise – wie später noch ausgeführt werden wird – für den Einsatz von bekannten lösungsmittelfreier Kleber, welche als besonders umweltfreundlich gelten, geeignet.

Bei einer Vorrichtung zur Durchführung des Verfahrens kann das den Fertighimmel aufnehmende Bauteil der Montagevorrichtung an seiner dem Fertighimmel zugewandten Seite eine zur Erzeugung eines Anpressdruckes aufblasbares Luftkissen tragen. Durch diese vorteilhafte Ausgestaltung wird auf den gesamten Fertighimmel ein gleichmässiger Druck erzeugt sowie Massabweichungen und Unebenheiten ausgeglichen.

Die Ansprüche 8 und 9 kennzeichnen vorteilhafte Ausführungsformen des den Fertighimmel aufnehmenden Bauteils der Montagevorrichtung bei Verwendung des o. g. Luftkissens und Einsatz eines lösungsmittelfreien Klebers. Wird für die Befestigung des Fertighimmels – wie bei dem eingangs beschriebenen, bekannten Verfahren – ein Kontaktkleber verwendet, dann ist nur der Anpressdruck entscheidend; Lufteinschlüsse zwischen den Klebeflächen beeinträchtigen die Haltekraft dabei nicht wesentlich. Anders hingegen bei einem lösungsmittelfreien Kleber, welcher aufgrund seiner Eigenschaften zunehmend Verwendung findet. Bei diesem Kleber ist es für die Haltekraft entscheidend, dass keine Lufteinschlüsse vorliegen. Dies ist jedoch beim Anpressen eines gewölbten Fertighimmels an eine entsprechende Dachkontur besonders problematisch. Durch die kennzeichnenden Merkmale der Ansprüche 8 und 9 wird dieses Problem dadurch gelöst, dass der Fertighimmel durch das den Fertighimmel aufnehmende Bauteil zunächst an einem Punkt an das Fahrzeugdach angepresst wird, von diesem Punkt anschliessend eine Linienberührung ausgeht und erst dann von dieser Linie ausgehend nach und nach eine Flächen-Anpressung erfolgt. Zur Erzeugung der «Punktberührung» ist an dem den Fertighimmel aufnehmenden Bauteil ein Andrückstempel geringen Durchmessers angeordnet; zur Bewirkung einer Linienberührung mit anschliessender Flächenausdehnung sind über das Luftkissen nachgiebige Gurte geführt. Diese Gurte bewirken, dass das Luftkissen sich zunächst an der Stelle nach oben wölbt, an denen die Gurte am weitesten von ihrer Einspannstelle entfernt sind – gewöhnlich also in der Mitte des Luftkissens. Das Andrücken des Fertighimmels geschieht erfindungsgemäss also dadurch, dass zunächst der Andrückstempel den Fahrzeughimmel «punktförmig» an das Fahrzeugdach andrückt. Anschliessend wird das Luftkissen aufgeblasen, welches zunächst linienförmig, vom Andrückstempel aus das Fahrzeugdach anpresst und bei weiterem Befüllen des Luftkissens von der Linie aus nach aussen hin den Fahrzeughimmel gänzlich mit Druck beaufschlagt.

Wird das den erforderlichen Gegendruck auf die Aussenseite des Fahrzeugdaches bewirkende Mittel der Montagevorrichtung ebenfalls durch ein aufblasbares Luftkissen gebildet, dann lässt sich auch auf dieser Seite ein gleichmässiger, von Unebenheiten und Toleranzabweichungen unabhängiger Druck auf das Fahrzeugdach aufbringen und damit einer Verformung desselben entgegenwirken.

Vorteilhaft ist, wenn das auf die Aussenseiten des Fahrzeugdaches wirkende Luftkissen zur Anpassung an die Dachkonturen/Dachausschnitte unterschiedlicher Fahrzeugkarosserien in wenigstens zwei getrennt und/oder unterschiedlich befüllbare Abschnitte aufgegliedert ist. Somit lässt sich für die Aussenseite des Fahrzeugdaches ein und dasselbe Luftkissen verwenden, unabhängig davon, in welchem Fahrzeugtyp ein Fertighimmel montiert werden soll. Umrüstzeiten entfallen und ein kontinuierlicher Ablauf auch bei unterschiedlichen Fahrzeugtypen ist gewährleistet. Als unterschiedliche Fahrzeugtypen werden nicht nur in ihrer Aussenkontur unterschiedlich gestaltete Fahrzeugkarosserien gesehen, sondern auch in ihrer Form gleiche, jedoch wahlweise mit oder ohne einen Schiebedachausschnitt ausgeführte Karossen. Wird bei beiden Arten der Bereich des Schiebedaches von der Verklebung ausgespart, dann ist in dieser Hinsicht keine Differenzierung notwendig.

Zur Anpassung des auf die Dachaussenseite und/oder auf den Fertighimmel wirkende Luftkissen an die jeweilige Dachkontur kann den Luftkissen ein Luftzylinder zugeordnet sein, welcher nach Massgabe der zu bestückenden Fahrzeugkarosserie volumenorientiert befüllbar ist.

Um das Volumen der beiden Luftkissen zu beschränken, kann das auf das Fahrzeugdach einwirkende Mittel (nachfolgend als Oberteil bezeichnet) der Montagevorrichtung auf das den Fertighimmel aufnehmende Bauteil (nachfolgend als Unterteil bezeichnet) nach dem Einfahren der Montagevorrichtung in die Fahrzeugkarosserie auf einander zu bewegt sein.

Von grossem Vorteil ist es, wenn bei Verwendung der bereits bei der Verfahrensbeschreibung genannten Trägerelemente diese ohne Steuergeräte ausgebildet sind und die Luftzuführung zu dem an dem Trägerelement festgelegten Luftkissen über Einfüllöffnungen erfolgt, die beim Bewegen des Oberteils auf die Kassette zu durch sich anlegende und abstützende Zuführleitungen mit Luft beaufschlagbar sind. Dadurch, dass die Trägerelemente ohne Steuergeräte ausgebildet sind und die Luftzuführung erst in der Montagevorrichtung erfolgt, ist das Trägerelement ein kostengünstig herstellbares, unempfindliches Transporthilfsmittel. Es ist typabhängig und kann deshalb zur einfachen Typerkennung herbeigezogen werden.

Die Ansprüche 15 und 16 kennzeichnen Ausführungsformen der Erfindung, durch welche mit einfachen Mitteln der Fahrzeughimmel in der Fahrzeugkarosserie ausgerichtet wird. Durch die «schwimmende» Aufnahme der Kassette im Unterteil und durch an der Kassette angebrachte Führungselemente wird erreicht, dass beim Bewegen des Unterteils auf das Oberteil der Montagevorrichtung zu die Führungselemente an den Dachsäulen des Fahrzeuges entlanggleiten und die Kassette in der Horizontalen genau ausmitteln. Rohbautoleranzen werden dadurch in Bezug auf den montierten Fahrzeughimmel halbiert und Abweichungen der Winkellage der Dachsäulen ausgeglichen.

Besonders vorteilhaft ist, wenn die Montagevorrichtung auf einer Verfahreinheit montiert ist, welche auf zu beiden Seiten des Fördersystems der Fahrzeugkarosserie angeordneten Schienen durch ein Antriebssystem entgegen der Transportrichtung der Fahrzeugkarosserien bewegbar ist. Die Verfahreinheit ist so gestaltet, dass sie die Fahrzeugkarosserie U-förmig überspannt. Durch die Verfahreinheit wird die Voraussetzung dafür geschaffen, dass die Montage des Fertighimmels bei bewegter Karosserie möglich ist. Die Montagedauer und die Geschwindigkeit der auf einem Fördersystem angeordneten Fahrzeugkarosserien bestimmen den Weg der Verfahreinheit.

Zur Erzielung eines absoluten Synchronlaufes kann die Verfahreinheit mit dem Fördersystem der Fahrzeugkarosserien über ein Koppelelement verbindbar sein.

Besonders zweckmässig ist, wenn die Vorrichtung neben der Montagevorrichtung/Verfahreinheit ein vorgeschaltetes Prüffeld zur Erkennung der Position und des Zustandes des Fahrzeuges umfasst und die ermittelten Daten der Steuerung des Bewegungsablaufes beim Montagevorgang als auch bei der Auswahl und Zuführung der Fertighimmel verwendet wird.

So kann das Prüffeld Fühler und Abtastung der Höhenlage des Fahrzeugdaches aufweisen und der ermittelte Wert der selbsttätigen Höhenkorrektur der Montagevorrichtung dienen.

Anstelle von vier Fühlern an jeder Ecke des Fahrzeugdaches werden zwei an einander gegenüberliegenden Eckbereichen angeordnete Fühler vorgeschlagen, da dadurch bei reduziertem Aufwand trotzdem alle Daten zur Höhenkorrektur ermittelbar sind.

Um zu verhindern, dass die Vorrichtung oder die Fahrzeugkarosserie beschädigt wird, wenn beispielsweise die Fronthaube nicht voll geschlossen ist, kann das Prüffeld Einrichtungen beinhalten, welche den Schliesszustand der Türen und Klappen des Fahrzeuges überwachen und bei Offenstellung eines dieser Teile ein die Stillsetzung der Vorrichtung bewirkendes Signal erzeugt wird. Für die Erfassung können die verschiedensten, bekannten Einrichtungen verwendet werden, beispielsweise ein schwenkbar gelagerter, mit einem Schutzüberzug verkleideter, schwenkbar neben der Fahrzeugkarosserie gelagerter Stab, welcher auf seiner der Fahrzeugkarosserie abgewandten Seite auf einen Schalter einwirkt. Der Stab ist derart ausgerichtet, dass die zugeordnete Fahrzeugtüre in geöffnetem Zustand den Stab bewegt, wodurch der Schalter betätigt wird.

Zweckmässig ist auch ein der Montagevorrichtung/Verfahreinheit vorgeschaltetes Prüffeld zur Erkennung des Typs unterschiedlicher Fahrzeugkarosserien. Dadurch wird beispielsweise die Bewegung des Unterteils auf das Oberteil der Montagevorrichtung und die Befüllung der Luftkissen gesteuert. Die Steuerung der unterschiedlichen Fertighimmel sollte über eine weiter vorausschauende Steuerung erfolgen, da für deren Bereitstellung (Kleberbeschichtung) und Zuführung wesentlich längere Zeiten benötigt werden als der Montagevorgang ausmacht.

Bei Einsatz von Trägerelementen (Kassetten) ist es von besonderem Vorteil, wenn die mit einem Fertighimmel bestückte Kassette beim Einschieben in die Montagevorrichtung gleichzeitig eine leere Kassette aus der Montagevorrichtung auf die andere Seite abstösst und dass zu der Zeit, in welcher die Verfahreinheit mit der Montagevorrichtung sich in eine Position entfernt von der Übergabestation befindet, eine Brücke geschaffen wird, durch welche die leere Kassette zurück auf die «Einschubseite» bewegt wird. Dadurch lassen sich sehr kurze Wechselzeiten erreichen. Trotzdem wird die leere Kassette wieder auf die «Einschubseite» geführt, was für die meisten auf dieser Seite anschliessenden Zuführ- oder Übergabestationen von Vorteil ist.

So z.B., wenn die Kassetten durch ein paternosterähnliches Hubsystem mit doppelstöckigen Hubkörben zur Aufnahme je einer leeren und einer bestückten Kassette zuführbar sind.

In Verbindung mit einer automatisierten Anlage können die Fertighimmel durch eine Einsprühanlage automatisch mit Kleber beschichtet werden und durch eine Transporteinrichtung in eine Position nahe der Übergabestelle zur Montagevorrichtung bringbar sein, in welcher eine Strahlereinheit zur Wärmebehandlung des Klebers angeordnet ist. Durch die Wärmebehandlung kann die Anpressdauer des Fertighimmels an das Fahrzeugdach wesentlich reduziert und kürzere Durchlaufzeiten erreicht werden.

Ein Ausführungsbeispiel der Erfindung ist in der Zeichnung dargestellt und wird nachfolgend näher beschrieben. Es zeigt:

Fig. 1 in perspektivischer Ansicht die schematische Darstellung einer Vorrichtung zur vollautomatischen Montage von Fertighimmeln in Fahrzeugen,

Fig. 2 die Vorrichtung aus Fig. 1 in Seitenansicht und

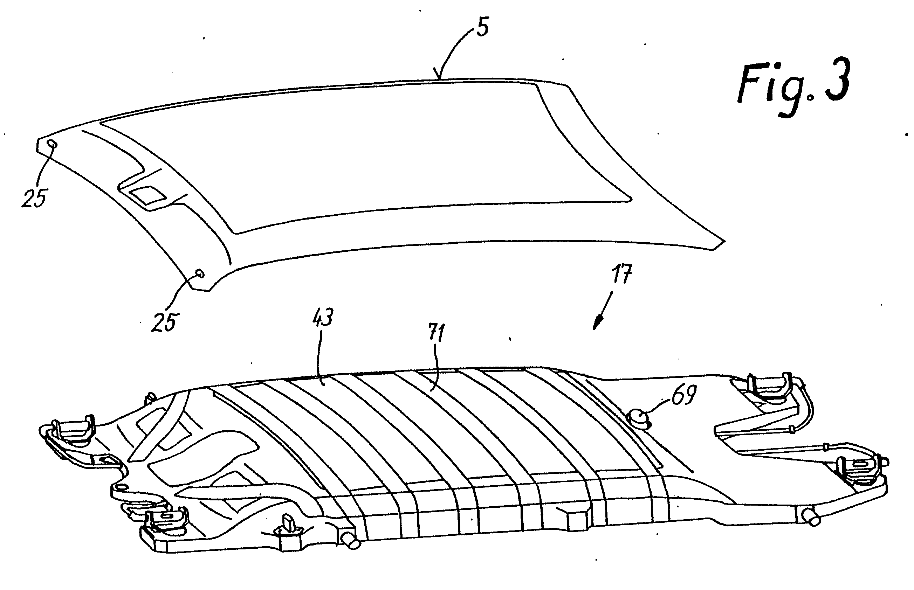

Fig. 3 ein Förderelement (Kassette) der Vorrichtung aus den Fig. 1 und 2 als Einzelteil.

Eine Vorrichtung zur Montage eines Fertighimmels 5 in einer Fahrzeugkarosserie 7 besteht im wesentlichen aus einer Verfahreinheit 9 mit einer daran befestigten Montagevorrichtung 11. Der Montagevorrichtung 11 werden über ein paternosterähnliches Hubsystem 13 und eine Übergabestation 15 auf Kassetten aufgelegte Fertighimmel 5 zugeführt.

Die Verfahreinheit 9 ist auf Schienen 19 und 21 bewegbar, welche sich zu beiden Seiten eines Fördersystems 23 für die Fahrzeugkarosserie 7 erstrecken. Die Verfahreinheit 9 ist zusammen mit der Montagevorrichtung 11 so ausgebildet, dass sie über die am Fördersystem 23 in dichtem Abstand hintereinander festgelegten Fahrzeugkarosserien 7 (in den Zeichnungen ist der Einfachheit halber nur eine dargestellt) hinwegbewegt werden können.

Die Vorrichtung umfasst ein vorgeschaltetes Prüffeld, welches von allen Fahrzeugkarosserien 7 durchfahren werden muss. Im Prüffeld wird jede Fahrzeugkarosserie 7 zur Typerkennung abgetastet und die Verbaufähigkeit (alle Türen und Klappen geschlossen) überprüft. Wird eine der vorgenannten Bedingungen registriert, so wird das Fördersystem 23 automatisch angehalten und die Ursache angezeigt. Desweiteren erfolgt im Prüffeld eine Höhenabtastung der auf dem Fördersystem 23 festgelegten Fahrzeugkarosserie 7 durch zwei diagonal angeordnete Masssysteme, welche bei einer ganz bestimmten Stellung der Fahrzeugkarosserie 7 zum Fördersystem 23 in Funktion gebracht werden. Der abgenommene Messwert wird für die spätere Verklebung abgespeichert. Wird ein bestimmtes Toleranzband überschritten, so befindet sich die Fahrzeugkarosserie 7 nicht in der verbauungsfähigen Lage und das Fördersystem 23 wird stillgesetzt.

Die Fertighimmel 5 werden in einem Geschoss unter demjenigen, in welchem das Fördersystem 23 aufgestellt ist, auf einen Kettenförderer einer automatischen Kleber-Einsprühanlage aufgelegt (nicht dargestellt). Dort wird im Durchlauf auf die Fertighimmel 5 ein lösungsmittelfreier Kleber aufgesprüht. Die Auswahl der jeweils erforderlichen, unterschiedlichen Fertighimmel 5 erfolgt durch eine automatische Fortschreibung der zur Bearbeitung anstehenden Fahrzeugkarosserien 7.

Nach Verlassen der Kleber-Einsprühanlage legt eine Übergabeeinrichtung den mit Kleber beschichteten Fertighimmel 5 auf eine bereitstehende Kassette 17 auf. Dieser Teil der Vorrichtung ist ebenfalls nicht dargestellt, da dafür bekannte Vorrichtungen einsetzbar sind. Die Fixierung des Fertighimmels 5 erfolgt an zwei Aussparungen 25 welche zur Aufnahme je eines Lagers für zwei Sonnenblenden im Fertighimmel 5 vorgesehen sind. Nun erfolgt das Einfahren der Kassette 17 mit dem Fertighimmel 5 in die obere Ebene eines doppelstöckigen Hubkorbes. Anschliessend erfolgt ein kurzes Anheben des Hubkorbes auf die untere Ebene desselben und das Ausstossen der für den nächsten Takt erforderlichen Leerkassette (ebenfalls nicht dargestellt). Nach dem Hochfahren des Hubkorbes in einem paternosterähnlichen Hubsystem 13 in die Übergabestation 15 im Obergeschoss wird die mit dem Fertighimmel 5 bestückte Kassette 17 ausgestossen.

Dabei läuft die Kassette 17 über ein Friktionsrollenband 27 in eine gestrichelt dargestellte Strahlereinheit 29. Die Strahlereinheit 29 besteht aus mehreren Strahlern, welche über der Kassette 17 angeordnet sind und mit etwa 80 °C auf den beschichteten Fahrzeughimmel 5 einwirken. Dabei verdampft in einer relativ kurzen Zeit (ca. 30 Sekunden) so viel Wasser aus dem lösungsmittelfreien Kleber, dass eine optimale Klebung auch bei nur kurzer Anpressdauer erreicht wird. Je nach dem verwendeten Fertighimmel 5 wird die Anzahl der Strahler gesteuert, so dass beispielsweise bei einem Fertighimmel für eine Fahrzeugkarosserie in Kombi-Bauart selbsttätig ein zusätzlicher Strahler angesteuert wird.

Nach der durch die Erwärmung beschleunigten Kleberaktivierung wird über das Friktionsrollenband 27 die bestückte Kassette in Einstossposition gebracht. Steht die Verfahreinheit 9 mit der Montagevorrichtung 11 bereits in Übergabeposition, so wird über einen nicht dargestellten Einstossmechanismus die volle Kassette in die Montagevorrichtung 11 ein- und gleichzeitig die in der Montagevorrichtung 11 befindliche Leerkassette auf die Gegenseite ausgestossen. Eine Arretier-Einrichtung im Unterteil 31 der Montagevorrichtung 11 gibt der Kassette 17 eine exakte Lage beim Verfahren. Eine Indexier-Einrichtung verbindet die Ausrichtrollen mit der Kassette schwimmend im Unterteil 31. Nun fährt die Kassette 17 und dem in dieser aufgelegten Fertighimmel 5 bestückte Montagevorrichtung der auf dem Fördersystem 23 festgelegten Fahrzeugkarosserie 7 entgegen.

Hat sich die Montagevorrichtung 11 von der Übergabestation entfernt, verbindet eine Brücke 35 die Ausstoss- und Einstoss-Einrichtung, so dass die Leerkassette zu einem Hubkorb des Hubsystems 13 zurückfahren kann.

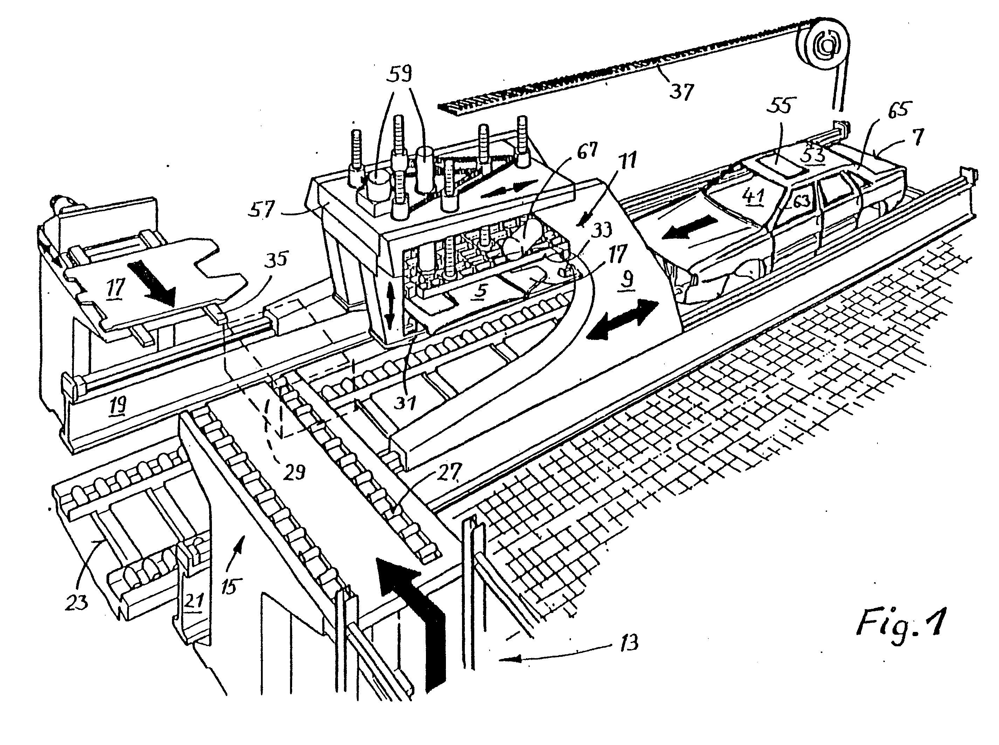

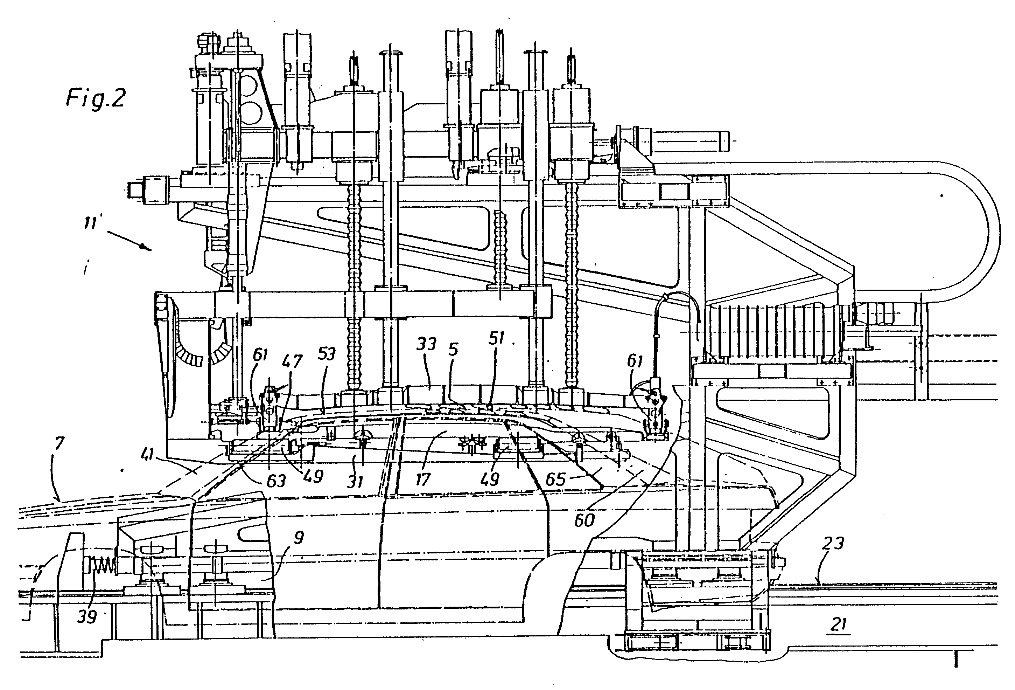

Die Verfahreinheit 9 mit der Montagevorrichtung 11 ist in den Fig. 1 und 2 in einer Stellung dargestellt, in welcher sie sich auf die Fahrzeugkarosserie 7 zubewegt. Der tragende Rahmen der Verfahreinheiten 9 ist in einer C-Form als Schweisskonstruktion gestaltet und läuft auf jeder Seite mit Kugelführungen. Die Verfahreinheit 9 nimmt über vier Kugelführungsschlitten die Montagevorrichtung 11 auf und führt über an beiden Seiten angeordneten Kabelschlepp die Energieversorgung und die Steuerleitungen zu. Zwei Zahnriemen 37 bewirken über einen Gleichstrommotor, einem Zwischengetriebe und einer Antriebswelle eine Verfahrgeschwindigkeit von 60 m/min. An den jeweiligen Enden der Schienen 19 bzw. 21 zur Führung der Verfahreinheit 9 sind Stossdämpfer 39 angebracht, die bei einem ungewollten Überfahren der Endlagen dämpfend die Verfahreinheit 9 abbremsen.

Hat die Verfahreinheit 9 eine Position zwischen zwei bewegten Fahrzeugkarosserien erreicht, wobei die vordere bereits mit einem Fertighimmel versehen, die nachfolgende noch ohne Fertighimmel ist, erfolgt ein Absenken der Motagevorrichtung 11 und das Einfahren der Montagevorrichtung in die Fahrzeugkarosserie 7 durch den vorderen Fensterausschnitt 41. Nun werden an der Verfahreinheit 9 angeordnete Klammereinheiten wirksam, welche eine Verbindung der Verfahreinheit 9 mit dem Fördersystem 23 bewirken, so dass ein Synchronlauf zwischen Fördersystem und Verfahreinheit erreicht wird. Am Fördersystem 23, welches aus miteinander verbundenen Skids besteht sind dazu besondere Mitnehmer angebracht.

Bevor der eigentliche Klebevorgang näher beschrieben wird, ist es notwendig, den Aufbau der Kassette 17 zu beschreiben. Die Kassette 17 ist das typabhängige Teil bei der mechanisierten Himmelmontage, welches sowohl als Trägerelement oder als Transporthilfsmittel als auch als Vorrichtungskörper bei der Verklebung dient. Jede Kassette 17 besteht aus einer AL-Gusslegierung, ist sehr flach gehalten, und entspricht in seiner oberen Form des Fertighimmels 5. Auf die Kassette 17 ist jeweils ein zum Anpressen erforderliches Luftkissen 43 angebracht. An den beiden Längsenden der Kassette 17 sind schwimmend je zwei Zangenarme 45 schwimmend gelagert, über die nach dem Einfahren in die Karosserie das Oberteil 33 mit der Kassette 17 geschlossen wird und über die auch das Befüllen der Luftkissen geschieht. Ein besonderes Merkmal der Kassette 17 ist der Umstand, dass an der Kassette 17 selbst keine Steuergeräte angebracht sind.

Die die Kassette 17 aufnehmende Montagevorrichtung 11 besteht aus einem selbsttätig höhenverstellbaren Oberteil 33 und einem die Kassette 17 aufnehmenden Unterteil 31. Die Bewegung der Höhenverstellung erfolgt über Kugelrollspindeln, die über ein Getriebe und einem Gleichstrommotor angetrieben werden. Sowohl das Oberteil 35 als auch das Unterteil 31 haben ein eigenes Messsystem, um auf die gewünschte Position gebracht werden zu können. Ein beim Einfahren in den Fensterausschnitt 41 wirksam werdendes Längenmesssystem 47 zur Längenkorrektur bzw. zur Längslagebestimmung des Fertighimmels 5 zur Fahrzeugkarosserie 7 ist an der Stirnseite angeordnet. Ein Vermittlungssystem mit zwei × zwei Rollen 49 zur Ausrichtung des Fertighimmels 5 zur Fahrzeugkarosserie 7 ist im Unterteil 31 der Montagevorrichtung 11 angebracht. Das Oberteil 33 ist mit einem Luftkissen 51 zur Abstützung der Klebekräfte am Fahrzeugdach 53 versehen. Das Luftkissen 51 ist mit mehreren Kammern versehen, welche je nach der vorliegenden Fahrzeugkarosserie gefüllt werden. So kann beispielsweise bei einer Fahrzeugkarosserie mit einem Schiebedachausschnitt 55 der entsprechende Bereich ausgespart werden. Die Luftverteilung für beide Luftkissen 43 und 51 befindet sich auf dem Oberteil 33.

Die Montagevorrichtung 11 ist gegenüber der Verfahreinheit 9 durch einen Schlitten 57 bewegbar. Zwei Kugelführungen 59 fixieren das Unterteil 31, das Oberteil 33 und den Schlitten 57 zueinander. Vier am Oberteil 33 festgelegte Zangen 61 schaffen die Voraussetzung zur Verbindung der Kassette 17 und zum Befüllen des auf dieser festgelegten Luftkissens 43.

Nach der Beschreibung der Kassetten 17 und der Montagevorrichtung 11 wird nun der Verfahrensablauf weiter beschrieben.

Die Montagevorrichtung 11 wird entsprechend dem im Prüffeld ermittelten Höhenmesswert korrigiert und durch den Fensterausschnitt 41 in die Fahrzeugkarosserie 7 eingefahren. Nach dem Einfahren wird durch das Schliessen der Klammereinheiten der Synchronlauf zwischen dem Fördersystem 23 (Skid) und der Verfahreinheit 9 hergestellt. Durch das bereits beschriebene Längen-Messsystem, welches sich an dem Fensterausschnitt 41 orientiert, wird über den Schlitten 57 die Montagevorrichtung 11 in die für die Verklebung richtige Längslage gebracht. Gleichzeitig richten die Vermittlungssysteme mit ihren Rollen 49 unabhängig von einander an den vorderen (63 und hinteren (65 Dachpfosten die Kassette 17 auf Fahrzeugmitte aus.

Die über Kugelrollspindeln angetriebenen Ober- und Unterteile fahren über ihre Messsysteme auf Position zusammen, so dass die vier Zangen 61 die Verbindung zur Kassette 17 herstellen können. Über diese Zangen geschieht auch – wie bereits angesprochen – die Luftzuführung für das Aufblasen des Luftkissens 43 auf der Kassette 17.

Das Befüllen der Luftkissen 43 und 51 in einer kurzen Zeit, für die je nach dem Typ der Fahrzeugkarosserie 7 ein unterschiedliches Volumen benötigen, geschieht deshalb volumenorientiert durch einen am Oberteil 33 festgelegten Befüllzylinder 67, der ein eigenes Mess- und Stellsystem hat.

Nach dem volumenorientierten Befüllen wird mit konstantem Druck in beiden Luftkissen 43 und 51 etwa 20 Sekunden lang die Verklebung angepresst.

Bei dem verwendeten lösungsmittelfreien Kleber ist es unbedingt erforderlich, dass der Fertighimmel 5 zuerst nur mit einem Punkt Klebekontakt am Fahrzeugdach 53 erhält. Dann soll übergehend in Linienberührung letztlich der gesamte Flächenkontakt zwischen Fertighimmel 5 und Fahrzeugdach 53 hergestellt werden. Die Klebeverbindung darf also keine Lufteinschlüsse aufweisen. Das vorbeschriebene Anpressverhalten wird durch einen an der Kassette ausgebildeten Anpressstempel 69 und nachgiebige Gurte 71 erreicht, welche über das Luftkissen 43 geführt sind. Durch die nachgiebigen Gurte 71 wird beim Befüllen des Luftkissens 43 wölbt sich zunächst der Mittenbereich nach oben, welcher sich an den Anpressstempel 69 anschliesst. Bei weiterer Luftbeaufschlagung wird ausgehend von der mittigen Linienberührung nachgehend der gesamte Fertighimmel 5 an das Fahrzeugdach 53 angepresst.

Nach dem Abschluss des Klebevorganges – die Verfahreinheit 9 wurde durch das Fördersystem 23 dabei kontinuierlich weiterbewegt – wird die Montagevorrichtung 11 aus der Fahrzeugkarosserie 7 herausgefahren, welches in umgekehrter Reihenfolge als beim Einfahren geschieht. Nun wird die Montagevorrichtung 11 zwischen zwei Karosserien wieder hochgefahren. Inzwischen ist die Verfahreinheit 9 mit der Montagevorrichtung 11 durch die Mitnahme bis nahe an die Übergabestation 15 mitgeschleppt worden. Jetzt erfolgt die Entriegelung des Synchronlaufes. Da mit dem Antriebssystem der Verfahreinheit 9 keine genaue Position erreicht werden kann, wird das bereits beschriebene Längenmesssystem 47 in rückwärtig beaufschlagter Stellung eingesetzt, um die Montagevorrichtung 11 auf die genaue Position zu steuern, die zur Übergabe der Kassette erforderlich ist. Die Verfahreinheit 9 und mit ihr verbunden die Montagevorrichtung 11 steht damit wieder aufnahmebereit für einen neuen Vorgang.

Der Vollständigkeit halber soll abschliessend noch ausgeführt werden, dass während des Verklebeprozesses die zurückgeführte Leerkassette durch den Hubkorb an den Kassettenspeicher abgegeben und eine neue dem Typ der nächsten Fahrzeugkarosserie entsprechende aufgenommen wird.

**Patentansprüche**

1. Verfahren zur Montage von Fertighimmeln in Fahrzeugen, wobei auf die Rückseite des Fertighimmels Kleber aufgetragen, der Fertighimmel (7) in eine Montagevorrichtung eingelegt und die Montagevorrichtung durch einen Fensterausschnitt im Fahrzeug in dessen Fahrgastraum eingeführt, der Fertighimmel ausgerichtet und unter Druck an das Dach (53) des Fahrzeuges gepresst wird, dadurch gekennzeichnet, dass beim Anpressen des Fertighimmels (7) an das Fahrzeugdach (53) der erforderliche Gegendruck durch auf die Aussenseite des Fahrzeugdaches (53) einwirkende Mittel (Luftkissen 51) der Montagevorrichtung (11) erzeugt wird.

2. Verfahren nach Anspruch 1, dadurch gekennzeichnet, dass jeder Fertighimmel (7) ausserhalb der Montagevorrichtung (11) auf ein Trägerelement (Kassette 18) aufgesetzt wird, dass das bestückte Trägerelement gegen Austausch eines leeren Trägerelementes in die Montagevorrichtung (11) eingebracht wird, und dass für unterschiedlich ausgebildete Fahrzeugkarosserien (7) unterschiedliche Trägerelemente zur Aufnahme entsprechender Fertighimmel (5) Verwendung finden.

3. Verfahren nach Anspruch 2, dadurch gekennzeichnet, dass die Zuführung der Trägerelemente (Kassetten 17) automatisch erfolgt, wobei jedes Trägerelement auf einer Seite in die Montagevorrichtung (11) eingefahren wird und dabei gleichzeitig das in der Montagevorrichtung (11) befindliche, leere Trägerelement auf die andere Seite ausschiebt.

4. Verfahren für auf einem Fördersystem (23) bewegte Fahrzeugkarosserie (7) nach einem der Ansprüche 1 bis 3, dadurch gekennzeichnet, dass die Montagevorrichtung (11) selbsttätig auf die zu bestückende Fahrzeugkarosserie (7) zufährt, mit dem Fördersystem (23) verkoppelt und durch das Fördersystem (23) während des Montagevorganges in seine Ausgangsposition zurückbewegt wird.

5. Verfahren nach einem der Ansprüche 1 bis 4, dadurch gekennzeichnet, dass die das Trägerelement (Kassette 17) aufnehmenden Teile der Montagevorrichtung (11) nach Massgabe der relativen Höhe des Daches der auf dem Fördersystem (23) festgelegten Fahrzeugkarosserie (7) zur Montagevorrichtung (11) vor dem Einfahren in die Fahrzeugkarosserie (7) selbsttätig in der Höhe und nach Massgabe eines weiteren Fühlers beim Einfahren selbsttätig in Fahrzeug-Längsrichtung ausgerichtet werden.

6. Vorrichtung zur Durchführung des Verfahrens gemäss einem der Ansprüche 1 bis 5, dadurch gekennzeichnet, dass das den Fertighimmel (7) aufnehmende Bauteil der Montagevorrichtung (11) an seiner dem Fertighimmel (7) zugewandten Seite ein zur Erzeugung eines Anpressdruckes aufblasbares Luftkissen (43) trägt.

7. Vorrichtung nach Anspruch 6, dadurch gekennzeichnet, dass über das Luftkissen (43) nachgiebige Gurte (71) geführt sind.

8. Vorrichtung nach Anspruch 7, dadurch gekennzeichnet, dass an dem den Fertighimmel (5) aufnehmenden Bauteil ein Andrückstempel (69) geringen Durchmessers angeordnet ist, derart, dass beim Anpressen des Fertighimmels (5) der Andrückstempel (69) den Fahrzeughimmel (5) noch vor dem Luftkissen (43) «punktförmig» an das Fahrzeugdach (53) drückt.

9. Vorrichtung nach einem oder mehreren der Ansprüche 1 bis 8, dadurch gekennzeichnet, dass das den erforderlichen Gegendruck auf die Aussenseite des Fahrzeugdaches (53) bewirkende Mittel der Montagevorrichtung (11) durch ein aufblasbares Luftkissen (51) gebildet ist.

10. Vorrichtung nach Anspruch 9, dadurch gekennzeichnet, dass das Luftkissen (51) zur Anpassung an die Dachkonturen/Dachausschnitte unterschiedlicher Fahrzeugkarosserien (7) in wenigstens zwei getrennt und/oder unterschiedlich befüllbare Abschnitte aufgegliedert ist.

11. Vorrichtung nach Anspruch 10, dadurch gekennzeichnet, dass dem auf die Dachaussenseite und/oder auf den Fertighimmel (5) wirkende Luftkissen (43 bzw. 51) ein Füllzylinder (67) zugeordnet ist, welcher nach Massgabe der zu bestückenden Fahrzeugkarosserie (7) volumenorientiert befüllbar ist.

12. Vorrichtung nach einem oder mehreren der Ansprüche 6 bis 11, dadurch gekennzeichnet, dass das auf das Fahrzeugdach (53) einwirkende Mittel (Oberteil 33) der Montagevorrichtung (11) auf das den Fertighimmel (5) aufnehmende Bauteil (Unterteil 31) nach dem Einfahren in die Fahrzeugkarosserie (7) zubewegbar ist.

13. Vorrichtung in Verbindung mit Trägerelementen nach Anspruch 12, dadurch gekennzeichnet, dass die Trägerelemente (Kassetten 17) ohne Steuergeräte ausgebildet sind und die Luftzuführung zu dem an der Kassette (17) festgelegten Luftkissen (43) über Einfüllöffnungen erfolgt, die beim Bewegen des Oberteils (33) auf die Kassette (17) zu durch sich anlegende und abdichtende Zuführleitungen mit Luft beaufschlagbar sind.

14. Vorrichtung nach Anspruch 13, dadurch gekennzeichnet, dass die Kassette (17) relativ zu dem sie aufnehmenden Bauteil (Unterteil 31) der Montagevorrichtung (11) in der Horizontalen bewegbar ist.

15. Vorrichtung nach Anspruch 13, dadurch gekennzeichnet, dass in den Randbereichen der Kassette (17) Führungselemente (Rollen 49) angeordnet sind, welche bei der Bewegung des Unterteils (31) auf das Oberteil (33) der Montagevorrichtung (11) an Dachsäulen der Fahrzeugkarosserie (7) entlanggleiten.

16. Vorrichtung nach einem der Ansprüche 6 bis 15, dadurch gekennzeichnet, dass die Montagevorrichtung (11) auf einer Verfahreinheit (9) montiert ist, welche auf zu beiden Seiten des Fördersystems (23) der Fahrzeugkarosserien (7) angeordneten Schienen (21, 23) durch ein Antriebssystem entgegen der Transportrichtung der Fahrzeugkarosserien (7) bewegbar ist.

17. Vorrichtung nach Anspruch 16, dadurch gekennzeichnet, dass die Verfahreinheit (9) mit dem Fördersystem (23) der Fahrzeugkarosserien (7) über ein Koppelelement verbindbar ist.

18. Vorrichtung nach einem der Ansprüche 6 bis 17 mit einem vorgeschalteten Prüffeld, dadurch gekennzeichnet, dass das Prüffeld Fühler zur Abtastung der Höhenlage des Fahrzeugdaches (53) aufweist und der ermittelte Wert der selbsttätigen Höhenkorrektur der Montagevorrichtung (11) dient.

**Claims**

1. Process for assembling ready-made roof linings in vehicles, adhesive being applied to the reverse of the ready-made roof lining, the ready-made roof lining (7) being placed in an assembling device and the assembling device being inserted through a window cutout in the vehicle into its interior, and the ready-made roof lining being aligned and being pressed against the roof (53) of the vehicle under pressure, characterised in that the counterpressure required when the ready-made roof lining (7) is pressed against the vehicle roof (53) is generated by a means (air cushion 51) on the assembling device (11) acting on the outside of the vehicle roof (53).

2. Process according to claim 1, characterised in that each ready-made roof lining (7) is mounted on a carrier element (cassette 17) outside the assembling device (11), in that the charged carrier element is introduced into the assembling device (11), replacing an empty carrier element, and in that, for vehicle bodies (7) of different design, different carrier elements are used to accommodate corresponding ready-made roof linings (5).

3. Process according to claim 2, characterised in that guiding of the carrier elements (cassettes 17) is automatic, each carrier element being introduced into the assembling device (11) on one side and at the same time the empty carrier element in the assembling device (11) being pushed out on the other side.

4. Process for a vehicle body (7) moving on a conveyor system (23) according to one of claims 1 to 3, characterised in that the assembling device (11) automatically approaches the vehicle body (7) to be fitted, links with the conveyor system (23) and is moved back to its starting position by the conveyor system (23) during the assembly operation.

5. Process according to one of claims 1 to 4, characterised in that the components of the assembling device (11) which accommodate the carrier element (cassette 17) are aligned automatically in height according to the height of the roof of the vehicle body (7) fixed on the conveyor system (23) in relation to the assembling device (11) before introduction into the vehicle body (7), and are aligned automatically in the longitudinal direction of the vehicle according to another probe during introduction.

6. Device for carrying out the process according to one of claims 1 to 5, characterised in that the structural component of the assembling device (11) accommodating the ready-made roof lining (7) can carry, on its side facing the ready-made roof lining (7), an inflatable air cushion (43) for generating a pressing pressure.

7. Device according to claim 6, characterised in that flexible belts (71) are passed over the air cushion (43).

8. Device according to claim 7, characterised in that a pressure stamp of small diameter (69) is positioned on the structural component accommodating the ready-made roof lining (5) such that on pressing against the ready-made roof lining (5), the pressure stamp (69) presses the ready-made roof lining (5) onto the vehicle roof (53) in "point form" before the air cushion (43).

9. Device according to one or more of claims 1 to 8, characterised in that the means on the assembling device (11) effecting the required counterpressure on the outside of the vehicle roof (53) is in the form of an inflatable air cushion.

10. Device according to claim 9, characterised in that air cushion (51) divided into at least two sections which are separate and/or can be filled to different degrees for matching to the roof contours/roof sections of different vehicle bodies (17).

11. Device according to claim 10, characterised in that the air cushion (43 or 51) acting on the outside of the roof and/or on the ready-made roof lining (5) is allocated a filling cylinder (67) which can be filled to a volume according to the vehicle body (7) to be fitted.

12. Device according to one or more of claims 6 to 11, characterised in that the means (top section 33) on the assembling device (11) acting on the vehicle roof (53) can be moved to the structural component (bottom section 31) accommodating the ready-made roof lining (5) after introduction into the vehicle body (7).

13. Device in connection with carrier elements according to claim 12, characterised in that the carrier elements (cassettes 17) are designed without control units and the air supply to the air cushion (43) fixed to the cassette (17) is via filling openings which can be charged with air through adjacent and supporting feed lines when the top section (33) is moved onto the cassette (17).

14. Device according to claim 13, characterised in that the cassette (17) can be moved in the horizontal plane relative to the structural component (bottom section 31) of the assembling device (11) accommodating it.

15. Device according to claim 13, characterised in that guide elements (rolls 49) are located in the edge regions of the cassette (17) and slide along roof columns of the vehicle body (7) on movement of the bottom section (31) to the top section (33) of the assembling device (11).

16. Device according to one of claims 6 to 15, characterised in that the assembling device (11) is mounted on an advance unit (9) which can be moved by a drive system against the direction of transportation of the vehicle bodies (7) on rails (21, 23) located on both sides of the conveyor system (23) of the vehicle bodies (7).

17. Device according to claim 16, characterised in that the advance unit (9) can be connected to the conveyor system (23) of the vehicle bodies (7) via a coupling element.

18. Device according to one of claims 6 to 17 with a prior test field, characterised in that the test field has probes for scanning the height of the vehicle roof (53) and the value determined is used for automatic height correction of the assembling device (11).

## Revendications

1. Procédé pour le montage d'habillages de plafond finis dans des voitures, dans lequel de la colle est appliqué au verso de l'habillage de plafond fini, l'habillage de plafond fini (7) est placé dans un dispositif de montage et le dispositif de montage est introduit dans la voiture, dans l'habitacle de celle-ci, à travers une découpure de fenêtre, l'habillage de plafond fini est aligné et appliqué sous pression contre le toit (53) de la voiture, caractérisé en ce que lors de l'application sous pression de l'habillage de plafond fini (7) contre le toit de voiture (53), la contre-pression nécessaire est produite par des moyens (coussin à air 51) du dispositif de montage (11) qui agissent sur le côté extérieur du toit (53) de la voiture.

2. Procédé selon la revendication 1, caractérisé en ce que chaque habillage de plafond fini (7) est posé, en dehors du dispositif de montage (11), sur un élément porteur (châssis 17), en ce que l'élément porteur chargé est introduit dans le dispositif de montage (11) en échange d'un élément porteur vide et en ce qu'il est fait usage, pour des carrosseries de voitures (7) réalisées sous des formes différentes, d'éléments porteurs différents, pour recevoir des habillages de plafond finis (5) correspondants.

3. Procédé selon la revendication 2, caractérisé en ce que l'amenée des éléments porteurs (châssis 17) s'effectue automatiquement, chaque élément porteur étant introduit d'un côté dans le dispositif de montage (11) et, ce faisant, il expulse en même temps de l'autre côté l'élément porteur vide qui se trouve dans le dispositif de montage (11).

4. Procédé selon l'une quelconque des revendications 1 à 3 pour des carrosseries de voitures (7) en mouvement sur un système transporteur (23), caractérisé en ce que le dispositif de montage (11) va rejoindre automatiquement la carrosserie de voiture (7) à équiper, s'accouple au système transporteur (23) et est ramené jusque dans sa position initiale par le système transporteur (23) pendant que s'effectue l'opération de montage.

5. Procédé selon l'une quelconque des revendications 1 à 4, caractérisé en ce qu'en fonction de la hauteur relative du toit de la carrosserie de voiture (7) fixée sur le systéme transporteur (23) par rapport au dispositif de montage (11), les parties du dispositif de montage (11) qui reçoivent l'élément de support (châssis 17) sont alignées automatiquement en hauteur avant de pénétrer dans la carrosserie de voiture (7) et en ce qu'au moment de cette pénétration, elles sont alignées automatiquement dans la direction longitudinale de la voiture suivant les indications d'un autre capteur.

6. Dispositif pour l'exécution du procédé selon l'une quelconque des revendications 1 à 5, caractérisé en ce que l'élément du dispositif de montage (11) qui reçoit l'habillage de plafond fini (17) porte, du côté dirigé vers l'habillage de plafond fini (17), un coussin à air gonflable (43) pour créer une pression d'application.

7. Dispositif selon la revendication 6, caractérisé en ce que des sangles flexibles (71) passent sur le coussin à air (43).

8. Dispositif selon la revendication 7, caractérisé en ce qu'il est disposé, sur l'élément qui reçoit l'habillage de plafond fini (5), un poinçon presseur (69) de petit diamètre, de telle manière que lors de l'application sous pression de l'habillage de plafond fini (5), le poinçon presseur (69) exerce, avant le coussin à air (43), une pression «ponctuelle» sur l'habillage de plafond fini (5) contre le toit de voiture (53).

9. Dispositif selon l'une quelconque des revendications 6 à 8, caractérisé en ce que les moyens du dispositif de montage (11) qui produisent la contre-pression nécessaire sur le côté extérieur du toit (53) de la voiture sont constitués par un coussin à air gonflable (51).

10. Dispositif selon la revendication 9, caractérisé en ce que le coussin à air (51) est divisé, pour s'adapter aux profils/découpures de toit de carrosseries de voitures (7) différentes, en au moins deux parties qui sont séparées et/ou remplissable différemment.

11. Dispositif selon la revendication 10, caractérisé en ce qu'il est adjoint, aux coussins à air (43, 51) qui agissent sur le côté extérieur du toit et/ou sur l'habillage de plafond fini (5), un cylindre à air (67) qui peut être rempli de façon volumétriquement orientée en fonction de la carrosserie de voiture (7) à garnir.

12. Dispositif selon l'une quelconque des revendications 6 à 11, caractérisé en ce que les moyens (partie supérieure 33) du dispositif de montage (11) qui agissent sur le toit (53) de la voiture peuvent être déplacés en direction de l'élément (partie inférieure 31) qui reçoit l'habillage de plafond fini (5), après l'introduction dans la carrosserie de voiture (7).

13. Dispositif selon la revendication 12 en liaison avec des éléments de support, caractérisé en ce que les éléments de support (châssis 17) sont réalisés sans organes de commande et en ce que l'alimentation en air du coussin à air (43) qui est fixé au châssis (17) s'effectue par des orifices d'entrée dans lesquels de l'air peut être injecté, lors du mouvement de la partie supérieure (33) vers le châssis (17), par des conduites d'alimentation qui s'appliquent et prennent appui les unes sur les autres.

14. Dispositif selon la revendication 13, caractérisé en ce que le châssis (17) peut être déplacé horizontalement par rapport à l'élément (partie inférieure 31) du dispositif de montage (11) qui le reçoit.

15. Dispositif selon la revendication 13, caractérisé en ce qu'il est disposé, dans les régions des bords du châssis (17), des éléments de guidage (galets 49) qui, lors du mouvement de la partie inférieure (31) vers la partie supérieure (33) du dispositif de montage (11), glissent le long de montants de toit de la carrosserie de voiture (7).

16. Dispositif selon l'une quelconque des revendications 6 à 15, caractérisé en ce que le dispositif de montage (11) est monté sur une unité mobile (9) qui peut être déplacée par un système moteur en sens inverse du transport des carrosseries de voitures (7), sur des rails (21, 23) disposés de part et d'autre du système de transport (23) des carrosseries de voitures (7).

17. Dispositif selon la revendication 16, caractérisé en ce que l'unité mobile (9) peut être raccordée au système de transport (23) des carrosseries de voitures (7) au moyen d'un élément d'accouplement.

18. Dispositif selon l'une quelconque des revendications 6 à 17 comportant une zone de contrôle placée en amont, caractérisé en ce que la zone de contrôle présente des capteurs pour la détection de la position en hauteur du toit de voiture (53) et la valeur déterminée sert à la correction automatique en hauteur du dispositif de montage (11).

59
57
37
55
53
7
65
67
11
33
41
63
17
9
17
35
5
19
31
27
29
23
15
21
13

*Fig.1*

0 117 899

*Fig. 2*

0 117 899

*Fig. 3*

0 117 899